(19) Europäisches Patentamt

European Patent Office

Office européen des brevets

(11) **EP 1 044 829 B1**

(12) **EUROPÄISCHE PATENTSCHRIFT**

(45) Veröffentlichungstag und Bekanntmachung des Hinweises auf die Patenterteilung:
**11.08.2004 Patentblatt 2004/33**

(51) Int Cl.⁷: **B60C 23/06**, B60C 23/04

(21) Anmeldenummer: **00107358.4**

(22) Anmeldetag: **05.04.2000**

(54) **Verfahren zur Überwachung des Luftdrucks der Reifen eines Kraftfahrzeuges**

Method for monitoring the air pressure of vehicle tyres

Procédé de contrôle de la pression de l'air de pneumatiques d'un véhicule automobile

(84) Benannte Vertragsstaaten:
**DE FR IT**

(30) Priorität: **15.04.1999 DE 19917034**

(43) Veröffentlichungstag der Anmeldung:
**18.10.2000 Patentblatt 2000/42**

(73) Patentinhaber: **Continental Aktiengesellschaft 30165 Hannover (DE)**

(72) Erfinder: **Ernst, Gerhard, Dr. 30629 Hannover (DE)**

(56) Entgegenhaltungen:
**EP-A- 0 607 695        EP-A- 0 938 987
DE-A- 4 205 911**

**Beschreibung**

Die Erfindung betrifft ein Verfahren zur Überwachung des Luftdrucks der Reifen eines Kraftfahrzeuges mittels eines Reifendruckkontrollsystems, das auf jedem Rad des Kraftfahrzeuges jeweils eine Luftdruckkontrollvorrichtung für jeden Reifen und eine Zentraleinheit enthält, in folgenden Verfahrensschritten:

- jede Reifendruckkontrollvorrichtung mißt in zeitlichen Abständen den Luftdruck des ihr zugeordneten Reifens
- jede Reifendruckkontrollvorrichtung übermittelt in zeitlichen Abständen eine Datensendung an die Zentraleinheit, die zumindest den gemessenen Luftdruck und eine die Reifendruckkontrollvorrichtung kennzeichnende individuelle Kennung enthält, wobei zwischen zwei aufeinander folgenden Datensendungen einer bestimmten Reifendruckkontrollvorrichtung eine Sendepause herrscht
- die Zentraleinheit vergleicht den übermittelten Luftdruck mit einem in ihr gespeicherten Luftdruck und erzeugt ein Warnsignal, wenn der übermittelte Luftdruck über ein vorgegebenes Maß hinaus von dem gespeicherten Luftdruck abweicht.

Die Erfindung betrifft ferner ein Kraftfahrzeug mit einem Reifendruckkontrollsystem, mit dem das Verfahren durchführbar ist.

Aus sicherheitstechnischen Gründen muß der Reifendruck von Kraftfahrzeugen regelmäßig überprüft werden, was von dem Kraftfahrzeugführer aus unterschiedlichen Gründen häufig versäumt wird. Deshalb sind bereits Reifendruckkontrollsysteme entwickelt worden, die auf jedem Rad eine Reifendruckkontrollvorrichtung enthalten, die den Reifendruck der Kraftfahrzeugreifen automatisch messen und zumindest eine kritische Abweichung von einem Soll-Reifendruck dem Kraftfahrzeugführer melden. Die Reifendruckkontrollvorrichtungen können z. B. in den Reifen einvulkanisiert oder eingeklebt sein oder auch am oder im Ventil bzw. an oder in der Feige befestigt sein. Entsprechende Ausbildungen sind bekannt.

Aus der gattungsgemäßen DE 42 05 911 A1 ist ein Verfahren zur Durchführung des Luftdrucks der Reifen eines Kraftfahrzeuges mittels eines Reifendruckkontrollsystems der eingangs genannten Art bekannt. Das Reifendruckkontrollsystem enthält jedem Reifen des Kraftfahrzeuges zugeordnet jeweils eine Reifendruckkontrollvorrichtung, die in regelmäßigen zeitlichen Abständen ein Hochfrequenzsignal an eine Zentraleinheit übermittelt, das zumindest ein gemessenes Drucksignal und eine individuelle Kennung enthält. Durch die Übermittlung einer individuellen Kennung wird vermieden, daß die an die Zentraleinheit übermittelten Daten beispielsweise mit Daten verwechselt werden, die von einem anderen Kraftfahrzeug ausgesendet werden. In der Zentraleinheit sind Wertepaare der Form (Kennung der Reifendruckkontrollvorrichtung/Radposition) für jedes Rad des Kraftfahrzeuges gespeichert, so daß durch entsprechenden Vergleich in der Zentraleinheit darauf geschlossen werden kann, welche Kennung mit dem dazugehörigen Drucksignal von welcher Radposition des Kraftfahrzeuges gesendet wird. Eine Abweichung des übermittelten Drucksignals von einem vorgegebenen Wert an einer Radposition wird dem Kraftfahrzeugführer von der Zentraleinheit angezeigt, so daß dieser geeignete Maßnahmen einleiten kann.

Das aus der DE 42 05 911 A1 bekannte Reifendruckkontrollsystem hat den Vorteil, daß die Reifendruckkontrollvorrichtungen direkt auf den Rädern des Kraftfahrzeuges angeordnet sind und somit der Luftdruck in den Reifen direkt gemessen und mittels eines Hochfrequenzsignals berührungslos an die Zentraleinheit übertragen werden kann. Für die Hochfrequenzsignale wird eine bestimmte Frequenz von zur Zeit 434 MHz verwendet. Diese Frequenz wird auch von anderen Sendern, z. B. Wetterstationen verwendet, die zum Teil eine sehr hohe Sendeleistung aufweisen. Befindet sich ein mit einem Reifendruckkontrollsystem der eingangs genannten Art ausgestattetes Kraftfahrzeug in der Nähe eines solchen Senders, so kann es dazu kommen, daß die von den Reifendruckkontrollvorrichtungen ausgesendeten Hochfrequenzsignale mit den von dem Störsender" ausgesendeten Hochfrequenzsignalen überlagert werden, so daß in der Zentraleinheit die von den Reifendruckkontrollvorrichtungen ausgesendeten Daten nicht mehr fehlerfrei oder gar nicht mehr empfangen werden können. Dies hat zur Folge, daß im Bereich eines Störsenders die Überwachung des Luftdrucks der Reifen des Kraftfahrzeuges nicht mehr zuverlässig möglich ist.

Neben der oben genannten Störung kann es in dem Reifendruckkontrollsystem zu weiteren Störungen kommen. So werden die Reifendruckkontrollvorrichtungen durch Batterien mit Energie versorgt, deren Lebensdauer begrenzt ist, so daß es nach Ablauf der Lebensdauer einer Batterie zu dem Ausfall einer Reifendruckkontrollvorrichtung kommt. Somit kann der Luftdruck des entsprechenden Reifens des Kraftfahrzeuges nicht mehr überwacht werden. Schließlich können in dem Reifendruckkontrollsystem auch Bauteildefekte auftreten, die zu dem Ausfall einer oder mehrerer Reifendruckkontrollvorrichtungen führen.

Zusammenfassend ist festzustellen, daß es in einem Reifendruckkontrollsystem, wie es aus der DE 42 05 911 A1 bekannt ist, sowohl zu kurzzeitigen Störungen (bewirkt durch einen Störsender) als auch zu langzeitigen Ausfällen, die eine Wartung erfordern (beispielsweise bewirkt durch eine leere Batterie), kommen kann. Wird dem Kraftfahrzeugfahrer bei jeder kurzzeitigen Störung des Reifendruckkontrollsystems ein Ausfall angezeigt, und stellt dieser später (nämlich wenn er den Bereich des Störsenders verlassen hat) fest, daß das System fehlerfrei funktioniert, so wird dies dazu führen, daß der Kraftfahrzeugfahrer eine Warnung "nicht mehr ernst" nimmt. Kommt es in dem Reifendruckkontrollsystem dann zu einem langzeitigen Ausfall, z. B. durch eine leere Batterie, so könnte der Kraftfahrzeugfahrer eine entsprechende Warnung außer Acht lassen und über einen langen Zeitraum mit einem beschädigten Reifendruckkontrollsystem weiterfahren. In diesem Fall ist die Sicherheit des Kraftfahrzeuges eingeschränkt.

Der Erfindung liegt die Aufgabe zugrunde, ein Verfahren zur Überwachung des Luftdrucks der Reifen eines Kraftfahrzeuges mittels eines Reifendruckkontrollsystems zu schaffen, bei dem Fehlanzeigen einer Funktionsstörung des Systems möglichst vermieden werden können. Der Erfindung liegt ferner die Aufgabe zugrunde, ein Kraftfahrzeug mit einem Reifendruckkontrollsystem zu schaffen, mit dem das Verfahren durchführbar ist.

Gemäß den kennzeichnenden Merkmalen des Anspruchs 1 wird die Aufgabe dadurch gelöst, daß

- in der Zentraleinheit jede Sendepause überwacht wird, die nach dem Empfang einer jeden Datensendung, die von einer bestimmten Reifendruckkontrollvorrichtung übermittelt wird, verstreicht und daß
- der Luftdruck der Reifen des Kraftfahrzeuges mittels eines weiteren Reifendruckkontrollsystems zumindest dann überwacht wird, wenn mindestens eine Sendepause einen vorgegebenen ersten Zeitwert überschreitet.

Die Aufgabe wird ebenfalls durch die kennzeichnenden Merkmale des nebengeordneten Anspruchs 5 gelöst.

Eine Sendepause, die zwischen zwei aufeinander folgenden Datensendungen einer bestimmten Reifendruckkontrollvorrichtung herrscht, wird im Sinne der Anmeldung wie folgt definiert: Eine Sendepause ist die Zeit, die beginnend mit dem Empfang einer Datensendung einer bestimmten Reifendruckkontrollvorrichtung in der Zentraleinheit bis zum Empfang der nächsten Datensendung derselben bestimmten Reifendruckkontrollvorrichtung in der Zentraleinheit verstreicht. Eine Sendepause kommt dadurch zustande, daß eine bestimmte Reifendruckkontrollvorrichtung in zeitlichen Abständen Datensendungen an die Zentraleinheit übermittelt. Eine Sendepause kommt auch dadurch zustande, daß eine bestimmte Reifendruckkontrollvorrichtung nach der Übermittlung einer Datensendung an die Zentraleinheit ausfällt (z. B. weil die Batterie leer ist) und somit keine weiteren Datensendungen übermittelt. Eine dritte Möglichkeit, durch die eine Sendepause zustande kommt, besteht darin, daß eine bestimmte Reifendruckkontrollvorrichtung zwar in zeitlichen Abständen Datensendungen aussendet, diese aber von der Zentraleinheit nicht empfangen werden können (z. B. weil das Kraftfahrzeug mit dem Reifendruckkontrollsystem sich im Bereich eines "Störsenders" befindet). Die Zentraleinheit kann nicht entscheiden, aufgrund welcher der genannten Möglichkeiten die Sendepause entsteht. Sie leitet lediglich die im Anspruch 1 genannte Maßnahme ein, wenn eine Sendepause den vorgegebenen ersten Grenzwert überschreitet.

Der Grundgedanke der Erfindung ist darin zu sehen, daß dem Reifendruckkontrollsystem, dessen Reifendruckkontrollvorrichtungen den gemessenen Luftdruck in Form von Hochfrequenzsignalen an die Zentraleinheit übermitteln (im folgenden erstes Reifendruckkontrollsystem genannt), ein weiteres Reifendruckkontrollsystem "zur Seite gestellt wird", dessen Funktionsweise unabhängig von dem ersten Reifendruckkontrollsystem ist und in dem keine Daten mittels Hochfrequenzsignalen übertragen werden. Somit kann das weitere Reifendruckkontrollsystem nicht durch einen "Störsender" vorübergehend gestört werden. Das weitere Reifendruckkontrollsystem ist vorzugsweise ein einfach ausgebildetes preiswertes System, das den Reifendruck der Räder zuverlässig, wenn auch mit geringerer Genauigkeit als das erste Reifendruckkontrollsystem, überwacht. Bei dem weiteren Reifendruckkontrollsystem kann es sich beispielsweise um ein Reifendruckkontrollsystem handeln, das den Luftdruck der Reifen aus dessen Abrollumfängen bestimmt (derartige Systeme sind beispielsweise aus der EP 647 536 B1, der EP 675 812 A1 und der DE 44 00 913 bekannt), oder das den Luftdruck der Reifen aus ihrem Schwingungsverhalten bestimmt (derartige Reifenluftdruckkontrollsysteme sind beispielsweise aus der DE 197 23 037, der DE 43 30 617 und der US 5,753,809 bekannt).

Die mit der Erfindung erzielten Vorteile sind insbesondere darin zu sehen, daß eine Überwachung des Luftdruckes der Reifen des Kraftfahrzeuges durch das weitere Reifenluftdruckkontrollsystem sichergestellt ist, wenn es in dem ersten Reiferidruckkontrollsystem zu einer Störung kommt. Aus diesem Grunde ist die Sicherheit des Kraftfahrzeuges zu jeder Zeit gewährleistet. Somit braucht eine Störung des ersten Reifendruckkontrollsystems dem Kraftfahrzeugfahrer nicht gemeldet zu werden und eine fehlerhafte Anzeige einer Funktionsstörung ist ausgeschlossen.

Gemäß einer Weiterbildung des Verfahrens nach Anspruch 2 wird ein Warnsignal erzeugt, wenn mindestens eine Sendepause einen vorgegebenen zweiten Grenzwert überschreitet, der wesentlich größer als der erste vorgegebene Grenzwert ist. Der zweite Grenzwert wird hierbei vorzugsweise so gewählt, daß innerhalb des Zeitraumes, der durch diesen Grenzwert vorgegeben ist, eine kurzfristige Störung des ersten Reifendruckkontrollsystems mit hoher Wahrscheinlichkeit behoben ist (z. B., weil das Kraftfahrzeug den Bereich des "Störsenders" verlassen hat). Als zweiter Grenzwert wird vorzugsweise eine Zeit vorgegeben, die zwischen 10 und 60 Minuten liegt. Der Vorteil dieser Weiterbildung ist darin zu sehen, daß dem Kraftfahrzeugfahrer mit hoher Wahrscheinlichkeit nur langfristige Störungen des ersten Reifendruckkontrollsystems angezeigt werden, die eine Wartung oder Reparatur notwendig machen, so daß Fehlanzeigen einer Funktionsstörung weitestgehend ausgeschlossen sind. Vorübergehende Störungen, in denen der Luftdruck der Reifen mit dem weiteren Reifendruckkontrollsystem überwacht wird, werden dem Kraftfahrzeugfahrer hingegen nicht angezeigt, so daß er durch derartige Anzeigen nicht "verwirrt" werden kann.

**EP 1 044 829 B1**

Gemäß einer Weiterbildung des Verfahrens nach Anspruch 3 ist jedem Rad des Kraftfahrzeuges jeweils ein Drehsensor fest zugeordnet, wobei das weitere Reifendruckkontrollsystem den Luftdruck der Reifen mittels der Drehsensorsignale in an sich bekannter Art und Weise überwacht. Reifendruckkontrollsysteme, die den Luftdruck der Reifen mittels der Drehzahlsensorsignale überwachen, sind beispielsweise aus der EP 647 536 B1, der EP 675 812 A1 und der DE 44 00 913 bekannt. Der Vorteil der Weiterbildung ist darin zu sehen, daß nahezu jedes moderne Kraftfahrzeug über Drehzahlsensoren verfügt, die Bestandteil eines Schlupfregelsystems sind. Zur Durchführung des Verfahrens benötigt das Kraftfahrzeug somit keine Bestandteile, die nicht ohnehin vorhanden wären.

Gemäß einer Weiterbildung der Erfindung nach Anspruch 4 wird die Überwachung des Luftdrucks der Reifen des Kraftfahrzeuges wie folgt vorgenommen:

- jedem Rad des Kraftfahrzeuges ist jeweils ein Drehzahlsensor fest zugeordnet
- mittels der Drehzahlsensorsignale und der von den Reifendruckkontrollvorrichtungen übermittelten Luftdrücke wird mindestens ein Kennfeld erstellt, mittels dem bei Ausfall einer bestimmten Reifendruckkontrollvorrichtung bei Kenntnis der Drehzahlsensorsignale und der von den übrigen Reifendruckkontrollvorrichtungen übermittelten Luftdrücke der Luftdruck des Reifens zumindest näherungsweise bestimmbar ist, dem die ausgefallene Reifendruckkontrollvorrichtung zugeordnet ist, und daß
- dann, wenn die Sendepause einer bestimmten Reifendruckkontrollvorrichtung den vorgegebenen ersten Grenzwert überschreitet, der Luftdruck des entsprechenden Reifens mit Hilfe des Kennfeldes, der Drehzahlsensorsignale und der von den übrigen Reifendruckkontrollvorrichtungen übermittelten Luftdrücke zumindest näherungsweise bestimmt wird.

Unter dem Ausfall einer oder mehrerer Reifendruckkontrollvorrichtungen ist hier und im folgenden zu verstehen, daß die Zentraleinheit von dieser Reifendruckkontrollvorrichtung keine Daten empfängt. Dies kann darauf zurückzuführen sein, daß die Funktion der Reifendruckkontrollvorrichtung gestört ist oder sich das Kraftfahrzeug im Bereich eines Störsenders befindet.

Die Weiterbildung macht sich den Umstand zunutze, daß meistens beide Reifendruckkontrollsysteme gleichzeitig arbeiten und somit das genannte Kennfeld mit hoher Genauigkeit erstellt werden kann. Der Vorteil der Weiterbildung ist darin zu sehen, daß die Genauigkeit des weiteren Reifendruckkontrollsystems, das den Luftdruck der Reifen aus den Drehzahlsensorsignalen bestimmt; erheblich gesteigert werden kann.

Gemäß einer Weiterbildung der Erfindung nach Anspruch 5 wird der Luftdruck der Reifen eines Kraftfahrzeuges wie folgt überwacht:

- jedem Rad des Kraftfahrzeuges wird jeweils ein Drehzahlsensor fest zugeordnet
- mittels der Drehzahlsensorsignale und der von den Reifendruckkontrollvorrichtungen übermittelten Luftdrücke wird mindestens ein Kennfeld erstellt, mittels dem bei Ausfall mehrerer Reifendruckkontrollvorrichtungen bei Kenntnis der Drehzahlsensorsignale bestimmbar ist, ob der Luftdruck in den Reifen des Kraftfahrzeuges ausreichend ist oder ob der Luftdruck in mindestens einem der Reifen nicht ausreichend ist, und daß
- dann, wenn die Sendepause mehrerer Reifendruckkontrollvorrichtungen den vorgegebenen ersten Grenzwert überschreitet, mit Hilfe des Kennfeldes bestimmt wird, ob er Luftdruck in den Reifen des Kraftfahrzeuges ausreichend ist, oder ob der Luftdruck in mindestens einem der Reifen nicht ausreichend ist.

Unter der Formulierung, daß der Luftdruck in den Reifen des Kraftfahrzeuges ausreichend ist, ist zu verstehen, daß der Luftdruck eines jeden Reifens des Kraftfahrzeuges nicht über einen vorgegebenen Wert hinaus von einem vorgegebenen Soll-Luftdruck abweicht. Auch diese Weiterbildung macht sich den Umstand zunutze, daß meistens beide Reifendruckkontrollsysteme gleichzeitig arbeiten und somit das genannte Kennfeld mit hoher Genauigkeit erstellt werden kann. Der Vorteil der Weiterbildung ist darin zu sehen, daß für den Fall, wenn die Sendepause mehrerer Reifendruckkontrollvorrichtungen den vorgegebenen ersten Grenzwert überschreitet, die Zuverlässigkeit der Aussage, ob der Luftdruck in den Reifen des Kraftfahrzeuges ausreichend ist oder ob der Luftdruck in mindestens einem der Reifen nicht ausreichend ist, erheblich gesteigert werden kann.

Ein Ausführungsbeispiel und weitere Vorteile der Erfindung werden im Zusammenhang mit den nachstehenden Figuren erläutert, darin zeigt:

Fig. 1 ein Kraftfahrzeug mit einem Reifendruckkontrollsystem,
Fig. 2 ein Flußdiagramm.

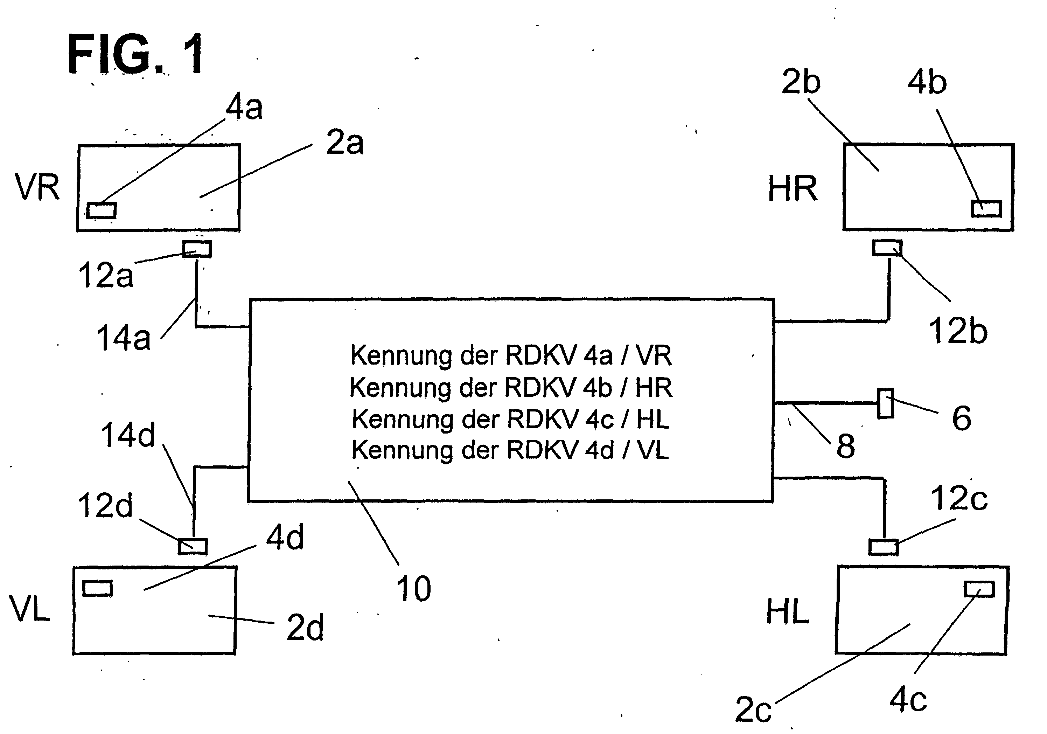

Figur 1 zeigt in stark schematisierten Darstellung ein Kraftfahrzeug mit Rädern 2a bis 2d, das über ein erstes Reifendruckkontrollsystem verfügt. Das erste Reifendruckkontrollsystem enthält u. a. Reifendruckkontrollvorrichtungen 4a bis 4d, von denen jeweils eine in dem Reiten der Kraftfahrzeugräder 2a bis 2d enthalten ist, (z. B. im Reifengummi bzw. im oder am Ventil), oder von denen jeweils eine einem Reifen zugeordnet ist, z. B. durch entsprechende Positionierung und Befestigung an der Feige. Die Reifendruckkontrollvorrichtungen 4a bis 4d verfügen jeweils über einen Sender, mit dessen Hilfe sie Daten in Form von Hochfrequenzsignalen an einen Empfänger 6 berührungslos übermitteln können. Dieser übermittelt die empfangenen Daten über den Übertragungsweg 8 an eine Zentraleinheit 10. Im einfachsten Fall ist der Empfänger 6 als Empfangsantenne ausgebildet, mit Hilfe der die Zentaleinheit 10 die übermittelten Daten empfängt. Es wird im folgenden beispielhaft erläutert, wie der Luftdruck des Rades 2a in der Radposition "vorne rechts" (in der Figur 1 sind die Radpositionen vorne rechts", hinten rechts", hinten links" und "vorne links" mit VR, HR, HL und VL abgekürzt) mit Hilfe der Reifendruckkontrollvorrichtung 4a überwacht wird:

Die Reifendruckkontrollvorrichtung 4a mißt in regelmäßigen zeitlichen Abständen (etwa 1 mal pro Minute) den Luftdruck des Reifens des Kraftfahrzeugrades 2a und übermittelt eine Datensendung an die Zentraleinheit 10, die eine individuelle Kennung der Reifendruckkontrollvorrichtung 4a und den gemessenen Luftdruck enthält. In der Zentraleinheit 10 sind Wertepaare der Form (Kennung einer Reifendruckkontrollvorrichtung/Radposition) für jede Radposition des Kraftfahrzeuges gespeichert. Die Zentraleinheit 10 vergleicht die übermittelte individuelle Kennung mit den gespeicherten individuellen Kennungen und stellt fest, daß die Reifendruckkontrollvorrichtung 4a der Radposition "vorne rechts" zugeordnet ist. Daraufhin vergleicht die Zentraleinheit 10 den mit der Datensendung übermittelten Luftdruck mit einem für die entsprechende Radposition gespeicherten Luftdruck und gibt ein Warnsignal ab, wenn der übermittelte Luftdruck über ein vorgegebenes Maß hinaus von dem gespeicherten abweicht. Der Luftdruck der Räder 2b bis 2d wird mit Hilfe der Reifendruckkontrollvorrichtungen 4b bis 4d entsprechend überwacht.

Neben dem ersten Reifendruckkontrollsystem enthält das Kraftfahrzeug ein weiteres Reifendruckkontrollsystem, mit dessen Hilfe der Luftdruck der Räder 2a bis 2d unabhängig vom ersten Reifendruckkontrollsystem bestimmt werden kann. Bei dem weiteren Reifendruckkontrollsystem handelt es sich vorzugsweise um ein System, das den Luftdruck der Räder 2a bis 2d mit Hilfe von Drehzahlsensoren 12a bis 12d bestimmt, von denen jeweils einer einem Kraftfahrzeugrad 2a bis 2d fest zugeordnet ist. Jeder Drehzahlsensor 12a bis 12d übermittelt über einen Übertragungsweg 14a bis 14d das von ihm erzeugte Signal an die Zentraleinheit 10. Die Zentraleinheit 10 "weiß" von welcher Radposition aus das Drehzahlsensorsignal übermittelt wird. Liegt beispielsweise an dem Übertragungsweg 14a ein Signal an, so weiß die Zentraleinheit, daß dies von dem Drehzahlsensor 12a übermittelt wird, der der Radposition "vorne rechts" zugeordnet ist. Entsprechendes gilt für die übrigen Drehzahlsensoren 12b bis 12d. In der Zentraleinheit 10 kann aus den Drehzahlsensorsignalen in an sich bekannter Art und Weise der Luftdruck der Räder 2a bis 2d bestimmt werden. Entsprechende Verfahren sind beispielsweise aus der EP 647 536 B1, der EP 675 812 A1 und der DE 44 00 913 bekannt. Alternativ ist es möglich, daß aus den Signalen der Reifendruckkontrollvorrichtungen 4a bis 4d und den Signalen der Drehzahlsensoren 12a bis 12d in der Zentraleinheit ein bzw. mehrere Kennfelder erzeugt werden, aus denen sich der Luftdruck der Räder 2a bis 2d bestimmen läßt. Dies wird im Näheren im Zusammenhang mit der Figur 3 erläutert.

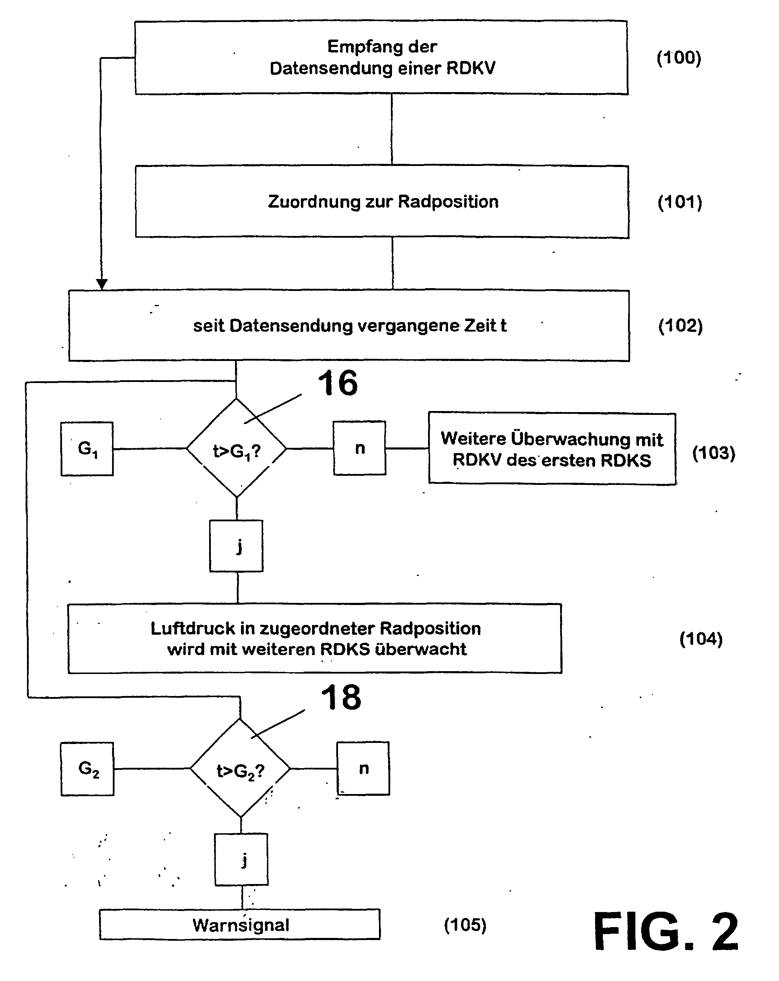

Im Zusammenhang mit Figur 2 wird im folgenden erläutert, wie in der Zentraleinheit 10 die Funktionsfähigkeit des ersten Reifendruckkontrollsystems überwacht wird und welche Maßnahmen eingeleitet werden, wenn eine Störung in diesem auftritt. Die Zentraleinheit 10 empfängt zu einem beliebigen Zeitpunkt die Datensendung einer Reifendruckkontrollvorrichtung (Schritt 100). Unmittelbar nach Empfang der Datensendung wird anhand der übermittelten individuellen Kennung in der Zentraleinheit geprüft, von welcher Radposition aus die Datensendung übermittelt wurde und danach wird der übermittelte Luftdruck mit dem gespeicherten Luftdruck verglichen (Schritt 101; Näheres s. Figurenbeschreibung zu Figur 1). Ferner wird unmittelbar nach Empfang der Datensendung ein Reset-Signal R auf einen Zähler gegeben, der dadurch auf 0 zurückgesetzt wird. Der Zähler beginnt dann die seit dem Empfang der Datensendung vergangene Zeit t zu zählen (Schritt 102) und der Zählerstand des Zählers wird auf einen ersten Eingang des Komparators 16 gegeben. Auf einen weiteren Eingang des Komparators wird ein erster Grenzwert $G_1$ gegeben, der zumindest geringfügig größer ist, als die Sendepause, die typischerweise zwischen der Aussendung zweier Datensendungen einer Reifendruckkontrollvorrichtung liegen (sendet also beispielsweise jede Reifendruckkontrollvorrichtung 4a bis 4d alle 60 Sekunden eine Datensendung an die Zentraleinheit 10, beträgt der Grenzwert $G_1$ zumindest eine Minute, bzw. ist zumindest geringfügig größer). In dem Komparator 16 wird ständig überprüft, ob die seit der letzten Datensendung vergangene Zeit t größer als der erste Grenzwert $G_1$ ist.

Sind die Sendepausen, die zwischen zwei aufeinander folgenden Datensendungen einer Reifendruckkontrollvorrichtung liegen, immer kleiner als der vorgegebene erste Grenzwert $G_1$, so wird durch das Reset-Signal "R" der Zähler immer zurückgesetzt, bevor die seit der letzten Datensendung vergangene Zeit t den Grenzwert $G_1$ erreicht. Somit liefert der Komparator 16, wenn die Reifendruckkontrollvorrichtung funktionsfähig ist, immer das Ausgangssignal "nein" und die Luftdrucküberwachung des Reifens wird weiterhin mit der ihm zugeordneten Reifendruckkontrollvorrichtung durchgeführt.

Kommt es in dem ersten Reifendruckkontrollsystem jedoch zu einer Störung und verlängert sich aufgrund dieser Störung die Sendepause zwischen zwei aufeinander folgenden Datensendungen einer Reifendruckkontrollvorrichtung, so überschreitet die seit der letzten Datensendung der Reifendruckkontrollvorrichtung vergangene Zeit t den vorgegebenen ersten Grenzwert $G_1$ und der Komparator 16 liefert das Ergebnis "ja". In diesem Fall wird zumindest der Luftdruck des Rades, dem die Reifendruckkontrollvorrichtung zugeordnet ist, mit Hilfe des weiteren Reifendruckkontrollsystems überwacht. Wenn das weitere Reifendruckkontrollsystem einen unzulässigen Luftdruckabfall des Reifens in der entsprechenden Radposition ermittelt, ergeht eine Meldung an den Kraftfahrzeugfahrer (Schritt 104).

Die seit der letzten Datensendung einer Reifendruckkontrollvorrichtung vergangene Zeit t wird zusätzlich auf einen ersten Eingang eines weiteren Komparators 18 gegeben, in dem sie mit einem zweiten vorgegebenen Grenzwert $G_2$ verglichen wird, der wesentlich größer ist als der erste vorgegebene Kennwert (d. h. mindestens eine Größenordnung größer; beträgt der erste Grenzwert $G_1$ also 1 bis 4 Minuten, so beträgt der zweite Grenzwert $G_2$ mindestens 10 bis 40 Minuten).

Ist die Sendepause zwischen zwei Datensendungen einer bestimmten Reifendruckkontrollvorrichtung immer kleiner als der zweite vorgegebene Grenzwert $G_2$, so ist dies ein Anzeichen dafür, daß eine evtl. in dem ersten Reifendruckkontrollsystem aufgetretene Störung kürzer ist als die durch den zweiten Grenzwert $G_2$ vorgegebene Zeit. Nach Aufhebung der vorübergehenden Störung, wenn also alle Reifendruckkontrollvorrichtungen 4a bis 4d wieder in den vorgesehenen zeitlichen Abständen ihre Datensendungen an die Zentraleinheit 10 aussenden, wird der Luftdruck in dem Reifen des Kraftfahrzeuges wieder mittels des ersten Reifendruckkontrollsystems kontrolliert (also mittels der übertragenen Datensendungen), so wie es bereits im Zusammenhang mit Figur 1 erläutert worden ist. Die Aufhebung der vorübergehenden Störung wird von der Zentraleinheit 10 daran "erkannt", daß wieder in den vorgesehenen zeitlichen Abständen Datensendungen von allen Reifendruckkontrollvorrichtungen 4a bis 4d empfangen werden und die Sendepausen zwischen den einzelnen Datensendungen somit den ersten Grenzwert $G_1$ nicht mehr überschreiten.

Erst wenn eine Sendepause zwischen zwei Datensendungen einer Reifendruckkontrollvorrichtung länger dauert als die durch den zweiten Grenzwert $G_2$ vorgegebene Zeit, schließt die Zentraleinheit 10 auf eine nicht vorübergehende Störung des ersten Reifendruckkontrollsystems und der Komparator 18 liefert das Ergebnis "ja". In diesem Fall wird ein Warnsignal an den Kraftfahrzeugfahrer gegeben (Schritt 105).

Beispiel: Jede Reifendruckkontrollvorrichtung 4a bis 4d sendet 1 mal pro Minute in unregelmäßigen Abständen eine Datensendung an die Zentraleinheit 10. Der Abstand zwischen zwei Datensendungen einer bestimmten Reifendruckkontrollvorrichtung, beispielsweise der Reifendruckkontrollvorrichtung 4a, kann somit maximal 120 Sekunden betragen. Dementsprechend wird für den ersten Grenzwert $G_1$ beispielsweise ein Wert von 130 Sekunden und für den zweiten Grenzwert $G_2$ ein Grenzwert von 30 Minuten vorgegeben. Zu einem beliebigen Zeitpunkt übermittelt z. B. die Reifendruckkontrollvorrichtung 4a eine Datensendung an die Zentraleinheit 10. Anhand der übermittelten individuellen Kennung erkennt die Zentraleinheit 10, daß die Datensendung von der Reifendruckkontrollvorrichtung 4a in der Radposition "vorne rechts" übermittelt wurde. Die Zentraleinheit 10 mißt die seit dieser Datensendung vergangene Zeit t und vergleicht diese ständig mit dem ersten vorgegebenen Grenzwert $G_1$. Übermittelt die Reifendruckkontrollvorrichtung 4a innerhalb der nächsten 120 Sekunden eine weitere Datensendung, so wird von der Zentraleinheit 10 wiederum anhand der individuellen Kennung erkannt, daß diese von der Reifendruckkontrollvorrichtung 4a stammt. Dementsprechend stellt die Zentraleinheit fest, daß die maximale Sendepause von 120 Sekunden eingehalten wurde und der Komparator 16 liefert das Ergebnis "nein". Der Luftdruck des Rades 2a kann somit weiterhin von der Reifendruckkontrollvorrichtung 4a überwacht werden.

Sendet hingegen die Reifendruckkontrollvorrichtung 4a länger als 130 Sekunden keine weitere Datensendung an die Zentraleinheit 10, so liefert der Komparator 16 das Ergebnis "ja". Zumindest der Luftdruck des Rades 2a wird in der Zentraleinheit 10 mit Hilfe des weiteren Reifendruckkontrollsystems überwacht. Wird in der Zentraleinheit 10 eine Abweichung des Luftdrucks über ein vorgegebenes Maß hinaus festgestellt, so ergeht eine Warnung an den Kraftfahrzeugfahrer.

Wird die nächste Datensendung der Reifendruckkontrollvorrichtung 4a innerhalb der nächsten 30 Minuten von der Zentraleinheit 10 empfangen, so lag in dem ersten Reifendruckkontrollsystem offensichtlich nur eine kurzzeitige Funktionsstörung vor, so daß der zweite Komparator 18 immer das Ergebnis "nein" liefert. Vergehen seit der letzten Datensendung der Reiferidruckkontrollvorrichtung 4a jedoch mehr als 30 Minuten, so liefert der Komparator 18 nach 30 Minuten das Ergebnis "ja" und es ergeht ein Warnsignal an den Kraftfahrzeugfahrer. In entsprechender Art und Weise werden die Sendepausen zwischen zwei Datensendungen der Reifendruckkontrollvorrichtungen 4b bis 4d überwacht und bei Überschreiten eines der beiden Grenzwerte $G_1$ oder $G_2$ wird entsprechend vorgegangen.

Im folgenden wird erläutert, wie mit Hilfe eines weiteren Reifendruckkontrollsystems, das jedem Rad des Kraftfahrzeuges zugeordnet jeweils einen Drehzahlsensor 12a bis 12d enthält (s. Figur 1), der Luftdruck in den Reifen der Räder 2a bis 2d des Kraftfahrzeuges bestimmt werden kann. Die Drehzahlsensoren 12a bis 12d sind vorzugsweise Bestandteil eines Schlupfregelsystems und erfassen (beispielsweise mittels einer Zahnradscheibe) die Raddrehgeschwindigkeiten U1 bis U4, d. h. die Anzahl der Umdrehungen pro Zeiteinheit, der Räder 2a bis 2d des Kraftfahrzeuges. Aus den einzelnen Raddrehgeschwindigkeiten wird die mittlere Raddrehgeschwindigkeit $U_m = (U1 + U2 + U3 + U4)/4$ berechnet. Danach wird für jedes Rad 2a bis 2d ein Raddrehzahlverhältnis $Ri = U_i/U_m$ (i = 1 bis 4) berechnet, das jeweils in der Nähe von 1 liegt.

Aus den Raddrehzahlverhältnissen R1 bis R4 wird eine dimensionslose Größe DEL wie folgt berechnet:

$$DEL = [((a_1 \times P_{soll1}/P_1) + b_1) \times R1 + ((a_3 \times P_{soll3}/P3) + b_3) \times R3] - [((a_2 \times P_{soll2}/P2)$$

$$+b_2) \times R2 + ((a_4 \times P_{soll4}/P_4) +b_4) \times R4].$$

In der Gleichung geben die Konstanten $a_1$ bis $a_4$ die Druckabhängigkeit des dynamischen Radumfanges wieder und die Konstanten $b_1$ bis $b_4$ korrigieren vom Mittelwert abweichende Radumfänge, die auf einen Konstruktionseinfluß des Reifens zurückzuführen sind. DEL kompensiert Kurven mit geringer Querbeschleunigung, wenn die Raddrehzahlverhältnisse R1 und R3 bzw. R2 und R4 zu jeweils diagonal gegenüberliegenden Rädern 2a bis 2d des Kraftfahrzeuges gehören. Üblicherweise, d. h., wenn die von den Reifendruckkontrollvorrichtungen 4a bis 4d übermittelten Druckwerte $P_1$ bis $P_4$ nicht über ein vorgegebenes Maß hinaus von den Solldruckwerten $P_{soll1}$ bis $P_{soll4}$ der entsprechenden Reifen abweichen, wird DEL zu Null.

DEL stellt ein Kennfeld dar, aus dem sich einer der Druckwerte $P_1$ bis $P_4$ berechnen läßt, wenn alle anderen in der obigen Gleichung auftretenden Größen bekannt sind. Darüber hinaus läßt sich aus dem Kennfeld ableiten, ob alle Druckwerte $P_1$ bis $P_4$ in dem Reifen des Kraftfahrzeuges ausreichend sind, wenn alle anderen in der obigen Gleichung auftretenden Größen bekannt sind. Wie das im einzelnen geschieht, wird im folgenden erläutert.

Im folgenden wird zunächst erläutert, wie die acht Konstanten $a_1$ bis $a_4$ und $b_1$ bis $b_4$ in der Zentraleinheit berechnet werden können: Die meiste Zeit wird sowohl das erste Reifendruckkontrollsystem, das den Luftdruck in den Reifen mit Hilfe der Reifendruckkontrollvorrichtungen 4a bis 4d bestimmt, als auch das weitere Reifendruckkontrollsystem mit den Drehzahlsensoren 12a bis 12d funktionieren. Aus diesem Grunde können in der Zentraleinheit 10 die gemessenen Druckwerte $P_1$ bis $P_4$ immer dann in die Bestimmungsgleichung für DEL eingesetzt werden, wenn diese von den Reifendruckkontrollvorrichtungen 4a bis 4d übermittelt werden. Darüber hinaus werden in die Bestimmungsgleichung für DEL die Raddrehzahlverhältnisse R1 bis R4 eingesetzt, die in der Zentraleinheit 10 zu einem bestimmten Zeitpunkt berechnet worden sind. Als Zeitpunkt für die Berechnung kann beispielsweise der Zeitpunkt herangezogen werden, in dem der letzte Druckwert $P_4$ von den vier zu übermittelnden Druckwerten $P_1$ bis $P_4$ übermittelt worden ist (die Zentraleinheit 10 erkennt vier zusammengehörige Druckwerte $P_1$ bis $P_4$ an den vier verschiedenen individuellen Kennungen, die von Reifendruckkontrollvorrichtungen 4a bis 4d übermittelt werden). Die in der Zentraleinheit 10 für jede Radposition gespeicherten Solldruckwerte $P_{soll1}$ bis $P_{soll4}$, die übermittelten Druckwerte $P_1$ bis $P_4$ und die in der Zentraleinheit 10 berechneten Raddrehzahlverhältnisse $R_1$ bis $R_4$ setzt man in die Gleichung für DEL ein. Da DEL zu 0 werden soll, ist die so erhaltene Gleichung eine Bestimmungsgleichung für die acht Unbekannten $a_1$ bis $a_4$ und $b_1$ bis $b_4$.

Von den Reifendruckkontrollvorrichtungen 4a bis 4d werden laufend neue gemessene Druckwerte $P_1$ bis $P_4$ übermittelt. Durch Wiederholung des oben genannten Verfahrens bekommt man also im Laufe der Zeit acht Bestimmungsgleichungen für die acht Unbekannten $a_1$ bis $a_4$ und $b_1$ bis $b_4$, deren eine Seite immer Null ist (da der Wert von DEL immer Null ist). Geht man beispielsweise davon aus, daß jede Reifendruckkontrollvorrichtung 4a bis 4d einmal pro Minute den von ihr gemessenen Druckwert $P_1$ bis $P_4$ an die Zentraleinheit 10 übermittelt, so erhält man in der Zentraleinheit 10 ein solches Gleichungssystem mit acht Gleichungen innerhalb von acht Minuten. Aus diesem Gleichungssystem lassen sich die Unbekannten $a_1$ bis $a_4$ und $b_1$ bis $b_4$ eindeutig bestimmen.

Im Laufe der Zeit kann man in der oben genannten Art und Weise die acht Unbekannten $a_1$ bis $a_4$ und $b_1$ bis $b_4$ aus acht zu einem Gleichungssystem zusammengefaßten Gleichungen immer wieder neu bestimmen und aus den in der Vergangenheit bestimmten Werten Mittelwerte $a_{1m}$ bis $a_{4m}$ und $b_{1m}$ bis $b_{4m}$ für die Konstanten $a_1$ bis $a_4$ und $b_1$ bis $b_4$ berechnen. Je länger der Zeitraum ist, über den das erste Reifendruckkontrollsystem mit den Reifendruckkontrollvorrichtungen 4a bis 4d und das weitere Reifendruckkontrollsystem mit den Drehzahlsensoren 12a bis 12d gemeinsam arbeiten, desto genauer nähern sich die berechneten Mittelwerte $a_{1m}$ bis $a_{4m}$ und $b_{1m}$ bis $b_{4m}$ an die wirklichen Werte der Konstanten $a_1$ bis $a_4$ und $b_1$ bis $b_4$ an.

Um festzustellen, wie gut die Mittelwerte $a_{1m}$ bis $a_{4m}$ und $b_{1m}$ bis $b_{4m}$ die wirklichen Werte für die Konstanten $a_1$ bis $a_4$ und $b_1$ bis $b_4$ wiedergeben, kann man wie folgt vorgehen: Man setzt die Mittelwerte $a_{1m}$ bis $a_{4m}$ und $b_{1m}$ bis $b_{4m}$ zusammen mit aktuell gemessenen Druckwerten $P_1$ bis $P_4$, den bestimmten Raddrehzahlverhältnissen R1 bis R4 und den Soll-Druckwerten $P_{soll1}$ bis $P_{soll4}$ in die Bestimmungsgleichung für die DEL ein und berechnet mit diesen Größen DEL: Im Idealfall, d. h. wenn alle Mittelwerte $a_{1m}$ bis $a_{4m}$ und $b_{1m}$ bis $b_{4m}$ mit den tatsächlichen Konstanten $a_1$ bis $a_4$ und $b_1$ bis $b_4$ übereinstimmen, wird DEL = Null. Da die berechneten Mittelwerte für die Konstanten jedoch mit hoher Wahrscheinlichkeit von den tatsächlichen Werten abweichen, wird auch der so berechnete Wert von DEL von Null abweichen. Nennt man den Betrag der Abweichung von Null: $\varepsilon$, so ist die Größe von $\varepsilon$ ein Maß dafür, wie genau man die Mittelwerte $a_{1m}$ bis $a_{4m}$ und $b_{1m}$ bis $b_{4m}$ der Konstanten bestimmt hat.

Wiederholt man das beschriebene Verfahren mehrfach, so erhält man mehrere Werte für $\varepsilon$, aus denen sich ein Mittelwert $\varepsilon_m$ berechnen läßt, der ein zuverlässiges Maß für die Güte der Berechnung der Mittelwerte $a_{1m}$ bis $a_{4m}$ und $b_{1m}$ bis $b_{4m}$ der Konstanten $a_1$ bis $a_4$ und $b_1$ bis $b_4$ darstellt.

Im folgenden wird beschrieben, wie der Luftdruck in einem Reifen bestimmt werden kann, wenn die entsprechende Reifendruckkontrollvorrichtung 4a bis 4d in diesem Reifen ausfällt und somit die Sendepause dieser Reifendruckkontrollvorrichtung 4a bis 4d den ersten Grenzwert $G_1$ (s. Fig. 2) überschreitet. Hierbei wird beispielhaft davon ausgegangen, daß die Reifendruckkontrollvorrichtung 4a ausfällt und somit der Druckwert $P_1$ nicht mehr an die Zentraleinheit 10 übertragen wird bzw. von dieser aufgrund einer Störung nicht mehr empfangen wird. In die Bestimmungsgleichung für DEL werden in der Zentraleinheit 10 sämtliche bekannten Größen, nämlich die zuvor berechneten $a_{1m}$ bis $a_{4m}$ und $b_{1m}$ bis $b_{4m}$ und die Soll-Druckwerte $P_{soll1}$ bis $P_{soll4}$, die in der Zentraleinheit 10 berechneten Raddrehzahlverhältnisse R1 bis R4 und die von den Reifendruckkontrollvorrichtungen 4b bis 4d übermittelten Druckwerte P2 bis P4 eingesetzt. Darüber hinaus wird in der Zentraleinheit 10 davon ausgegangen, daß der Luftdruck in dem Reifen des Rades 2a seit der letzten Übertragung weitestgehend konstant geblieben ist und daher weitestgehend dem zuletzt von der Reifendruckkontrollvorrichtung 4a übermittelten Luftdruck P1 entspricht. Dementsprechend wird in der Zentraleinheit 10 dieser zuletzt übertragene Druckwert $P_1$ in die Bestimmungsgleichung für DEL eingesetzt. In die Bestimmungsgleichung für DEL sind nunmehr alle Größen eingesetzt, so daß in der Zentraleinheit 10 DEL berechnet werden kann. Danach wird in der Zentraleinheit 10 die folgende Bedingung überprüft:

$$|DEL| > n \times \varepsilon_m, n \geq 1, \text{(zur Bedeutung des Faktors n: s. übernächsten Absatz.)}$$

Ist dies der Fall, so folgert" die Zentraleinheit 10, daß der Luftdruck des Reifens des Rades 2a über ein vorgegebenes Maß hinaus von dem Soll-Luftdruck $P_{soll\,1}$ abweicht (würde er dies nämlich nicht tun, so wäre IDELI ≤ n x $\varepsilon_m$). Wird eine solche unzulässige Abweichung des Luftdruckes $P_1$ des Reifens des Rades 2a in der Zentraleinheit 10 festgestellt, so ergeht eine Warnung an den Kraftfahrzeugfahrer. Die Größe der Druckabweichung des Luftdruckes $P_1$ vom Soll-Luftdruck $P_{soll1}$ kann abgeschätzt werden, indem in der Bestimmungsgleichung für DEL der Druckwert $P_1$ solange variiert wird, bis die Bedingung IDELI ≤ n x $\varepsilon_m$ erfüllt ist. In entsprechender Art und Weise wird vorgegangen, wenn anstatt der Reifendruckkontrollvorrichtung 4a eine der anderen Reifendruckkontrollvorrichtungen 4b bis 4d ausfällt.

Im folgenden wird die Bedeutung des oben erwähnten Faktors n erläutert: Für den Fall, daß n = 1 ist, geht die in dem letzten Absatz erwähnte Ungleichung über in IDELI > $\varepsilon_m$. Wird bei Ausfall einer Reifendruckkontrollvorrichtung 4a bis 4d |DEL| > $\varepsilon$, so läßt sich sagen, daß der Luftdruck in dem entsprechenden Rad über ein vorgegebenes Maß hinaus von dem vorgegebenen Luftdruck abweicht. Im Grenzfall jedoch, d. h. wenn IDELI ≈ $\varepsilon_m$, ist eine Entscheidung nur schwierig zu treffen, da dies entweder bedeutet, daß der Luftdruck in dem entsprechenden Reifen in Ordnung ist und die Abweichung des Wertes IDELI von 0 durch die ungenaue Bestimmung der Konstanten $a_1$ bis $a_4$ und $b_1$ bis $b_4$ zustande kommt, oder bedeutet, daß die Konstanten $a_1$ bis $a_4$ und $b_1$ bis $b_4$ genau bestimmt worden sind und der Luftdruck in dem Reifen bereits über ein vorgegebenes Maß hinaus von dem vorgegebenen Soll-Luftdruck abweicht.

Je größer man also den Wert von n wählt, desto sicherer läßt sich die Aussage machen, daß der Druckwert in einem Reifen des Kraftfahrzeuges über ein vorgegebenes Maß von dem Soll-Luftdruck abweicht, wenn IDELI > n x $\varepsilon_m$ wird. Vorzugsweise liegt der Wert von n zwischen 1 und 3.

Im folgenden wird erläutert, wie in der Zentraleinheit mit Hilfe der Bestimmungsgleichung für DEL auf die Druckwerte in den Reifen des Kraftfahrzeuges schließen kann, wenn mehr als eine bzw. alle Reifendruckkontrollvorrichtungen 4a bis 4d ausfallen und somit die Sendepause jeder Reifendruckkontrollvorrichtung 4a bis 4d den ersten Grenzwert $G_1$ (s. Fig. 2) überschreitet, beispielsweise weil das Kraftfahrzeug sich im Bereich eines Störsenders befindet. In die Bestimmungsgleichung für DEL werden in der Zentraleinheit 10 in diesem Fall die Mittelwerte $a_{1m}$ bis $a_{4m}$ und $b_{1m}$ bis $b_{4m}$ und die Solldruckwerte $P_{soll1}$ bis $P_{soll4}$ und die berechneten Raddrehzahlverhältnisse R1 bis R4 eingesetzt. Darüber hinaus wird in der Zentraleinheit 10 davon ausgegangen, daß die Luftdrücke in den Reifen $P_1$ bis $P_4$ in etwa den zuletzt übermittelten Druckwerten $P_1$ bis $P_4$ entsprechen und entsprechende Werte werden in die Bestimmungsgleichung für DEL eingesetzt. Daraufhin wird folgendes überprüft:

$$|DEL| > n \times \varepsilon, n \geq 1.$$

Ist dies der Fall, so "folgert" die Zentraleinheit 10 daraus, daß in mindestens einem der Reifen des Kraftfahrzeuges der tatsächliche Luftdruck über ein vorgegebenes Maß hinaus von dem Soll-Luftdruck abweicht (anderenfalls wäre IDELI ≤ n x $\varepsilon_m$). In diesem Fall ergeht eine Warnung an den Kraftfahrzeugfahrer.

Abschließend wird darauf aufmerksam gemacht, daß die obige Bestimmungsgleichung für DEL nur beispielhaft ist. Es können auch beliebige andere Kennfelder benutzt werden, aus denen sich eine Abhängigkeit der gemessenen Druckwerte von den Radgeschwindigkeiten der Räder, die von den Drehzahlsensoren 12a bis 12d bestimmt werden, ergibt.

**Bezugszeichenliste**

| | |
|---|---|
| 2a - 2d | Kraftfahrzeugrad |
| 4a - 4d | Reifendruckkontrollvorrichtung |
| 6 | Empfänger |
| 8 | Übertragungsweg |
| 10 | Zentraleinheit |
| 12a - 12d | Drehzahlsensor |
| 14a - 14d | Übertragungsweg |
| 16 | Komparator |
| 18 | Komparator |

**Patentansprüche**

**1.** Verfahren zur Überwachung des Luftdrucks der Reifen eines Kraftfahrzeuges mittels eines Reifendruckkontrollsystems, das auf jedem Rad (2a bis 2d) des Kraftfahrzeuges jeweils eine Reifendruckkontrollvorrichtung (4a bis 4d) für jeden Reifen und eine Zentraleinheit (10) enthält, in folgenden Verfahrensschritten:

- jede Reifendruckkontrollvorrichtung (4a bis 4d) mißt in zeitlichen Abständen den Luftdruck des ihr zugeordneten Reifens
- jede Reifendruckkontrollvorrichtung (4a bis 4d) übermittelt in zeitlichen Abständen eine Datensendung an die Zentraleinheit (10), die zumindest den gemessenen Luftdruck und eine die Reifendruckkontrollvorrichtung (4a bis 4d) kennzeichnende individuelle Kennung enthält, wobei zwischen zwei aufeinander folgenden Datensendungen einer bestimmten Reifendruckkontrollvorrichtung (4a bis 4d) eine Sendepause herrscht
- die Zentraleinheit (10) vergleicht den übermittelten Luftdruck mit einem in ihr gespeicherten Luftdruck und erzeugt ein Warnsignal, wenn der übermittelte Luftdruck über ein vorgegebenes Maß hinaus von dem gespeicherten Luftdruck abweicht

**dadurch gekennzeichnet, daß**

- in der Zentraleinheit (10) jede Sendepause überwacht wird, die nach dem Empfang einer Datensendung, die von einer bestimmten Reifendruckkontrollvorrichtung (4a bis 4d) übermittelt wird, verstreicht, und daß
- der Luftdruck der Reifen des Kraftfahrzeuges mittels eines weiteren Reifendruckkontrollsystems zumindest dann überwacht wird, wenn mindestens eine Sendepause einen vorgegebenen ersten Grenzwert überschreitet.

**2.** Verfahren zur Überwachung des Luftdrucks der Reifen eines Kraftfahrzeuges (2a bis 2d), nach Anspruch 1, **dadurch gekennzeichnet, daß** ein Warnsignal erzeugt wird, wenn mindestens eine Sendepause einen vorgegebenen zweiten Grenzwert überschreitet, der wesentlich größer als der erste vorgegebene Grenzwert ist.

**3.** Verfahren zur Überwachung des Luftdrucks der Reifen eines Kraftfahrzeuges (2a bis 2d), nach einem der Ansprüche 1 bis 2, **dadurch gekennzeichnet, daß** jedem Rad des Kraftfahrzeuges (2a bis 2d) jeweils ein Drehzahlsensor (12a bis 12d) fest zugeordnet ist, und daß das weitere Reifendruckkontrollsystem (4a bis 4d) den Luftdruck der Reifen mittels der Drehzahlsensorsignale in an sich bekannter Art und Weise überwacht.

**4.** Verfahren zur Überwachung des Luftdrucks der Reifen eines Kraftfahrzeuges, nach einem der Ansprüche 1 bis 2, **dadurch gekennzeichnet, daß**

- jedem Rad (2a bis 2d) des Kraftfahrzeuges jeweils ein Drehzahlsensor (12a bis 12d) fest zugeordnet ist, und daß
- mittels der Drehzahlsensorsignale und der von den Reifendruckkontrollvorrichtungen (4a bis 4d) übermittelten Luftdrücke mindestens ein Kennfeld erstellt wird, mittels dem bei Ausfall einer bestimmten Reifendruckkontrollvorrichtung (4a bis 4d) bei Kenntnis der Drehzahlsensorsignale und der von den übrigen Reifendruckkontrollvorrichtungen (4a bis 4d) übermittelten Luftdrücke der Luftdruck des Reifens zumindest näherungsweise bestimmbar ist, dem die ausgefallene Reifendruckkontrollvorrichtung (4a bis 4d) zugeordnet ist, und daß

- dann, wenn die Sendepause einer bestimmten Reifendruckkontrollvorrichtung (4a bis 4d) den vorgegebenen ersten Grenzwert überschreitet, der Luftdruck des entsprechenden Reifens mit Hilfe des Kennfeldes, der Drehzahlsensorsignale und der von den übrigen Reifendruckkontrollvorrichtungen übermittelten Luftdrücke zumindest näherungsweise bestimmt wird.

5. Verfahren zur Überwachung des Luftdrucks der Reifen eines Kraftfahrzeuges, nach einem der Ansprüche 1 bis 2, **dadurch gekennzeichnet, daß**

- jedem Rad (2a bis 2d) des Kraftfahrzeuges jeweils ein Drehzahlsensor (12a bis 12d) fest zugeordnet ist, und daß
- mittels der Drehzahlsensorsignale und der von den Reifendruckkontrollvorrichtungen (4a bis 4d) übermittelten Luftdrücke mindestens ein Kennfeld erstellt wird, mittels dem bei Ausfall mehrerer Reifendruckkontrollvorrichtungen (4a bis 4d) bei Kenntnis der Drehzahlsensorsignale bestimmbar ist, ob der Luftdruck in den Reifen des Kraftfahrzeuges ausreichend ist oder ob der Luftdruck in mindestens einem der Reifen nicht ausreichend ist, und daß
- dann, wenn die Sendepause mehrerer Reifendruckkontrollvorrichtungen (4a bis 4d) den vorgegebenen ersten Grenzwert überschreitet, mit Hilfe des Kennfeldes bestimmt wird, ob der Luftdruck in den Reifen des Kraftfahrzeuges ausreichend ist oder ob der Luftdruck in mindestens einem der Reifen nicht ausreichend ist.

6. Kraftfahrzeug (2a bis 2d) mit einem Reifendruckkontrollsystem (4a bis 4d), das auf jedem Rad des Kraftfahrzeuges jeweils eine Reifendruckkontrollvorrichtung (4a bis 4d) für jeden Reifen und eine Zentraleinheit (10) enthält und die Luftdrücke der Reifen wie folgt überwacht:

- jede Reifendruckkontrollvorrichtung (4a bis 4d) mißt in zeitlichen Abständen den Luftdruck des ihr zugeordneten Reifens
- jede Reifendruckkontrollvorrichtung (4a bis 4d) übermittelt in zeitlichen Abständen eine Datensendung an die Zentraleinheit (10), die zumindest den gemessenen Luftdruck und eine die Reifendruckkontrollvorrichtung (4a bis 4d) kennzeichnende individuelle Kennung enthält, wobei zwischen zwei aufeinanderfolgenden Datensendungen einer bestimmten Reifendruckkontrollvorrichtung (4a bis 4d) eine Sendepause herrscht
- die Zentraleinheit (10) vergleicht den übermittelten Luftdruck mit einem in ihr gespeicherten Luftdruck und erzeugt ein Warnsignal, wenn der übermittelte Luftdruck über ein vorgegebenes Maß hinaus von dem gespeicherten Luftdruck abweicht

**dadurch gekennzeichnet, daß**

- in der Zentraleinheit (10) jede Sendepause überwachbar ist, die nach dem Empfang einer jeden Datensendung, die von einer bestimmten Reifendruckkontrollvorrichtung (4a bis 4d) übermittelt wird, verstreicht, und daß
- das Kraftfahrzeug ein weiteres Reifendruckkontrollsystem (4a bis 4d) enthält, das den Luftdruck der Reifen des Kraftfahrzeuges zumindest dann überwacht, wenn mindestens eine Sendepause einen vorgegebenen ersten Grenzwert überschreitet.

## Claims

1. Method for monitoring the air pressure of the tyres of an automotive vehicle by means of a tyre pressure control system, which contains on each wheel (2a to 2d) of the automotive vehicle respectively one tyre pressure control device (4a to 4d) for each tyre and a central unit (10), in the following method steps:

- each tyre pressure control device (4a to 4d) measures at intervals of time the air pressure of the tyre associated with it,

- each tyre pressure control device (4a to 4d) transmits at intervals of time a data transmission to the central unit (10), which contains at least the measured air pressure and an individual identification characterising the tyre pressure control device (4a to 4d), there being a transmission pause between two successive data transmissions from a specific tyre pressure control device (4a to 4d),

- the central unit (10) compares the transmitted air pressure with an air pressure stored in it and generates a warning signal if the transmitted air pressure deviates beyond a predetermined amount from the stored air pressure,

**characterised in that**

- in the central unit (10) each transmission pause is monitored which expires after the receipt of a data transmission which is transmitted from a specific tyre pressure control device (4a to 4d) and **in that**
- the air pressure of the tyres of the automotive vehicle is monitored by means of an additional tyre pressure control system at least when at least one transmission pause exceeds a predetermined first limit value.

2.  Method for monitoring the air pressure of the tyres of an automotive vehicle (2a to 2d), according to claim 1, **characterised in that** a warning signal is generated if at least one transmission pause exceeds a predetermined second limit value which is substantially greater than the first predetermined limit value.

3.  Method for monitoring the air pressure of the tyres of an automotive vehicle (2a to 2d) according to one of claims 1 to 2, **characterised in that** there is fixedly associated with each wheel of the automotive vehicle (2a to 2d) respectively one speed sensor (12a to 12d), and **in that** the additional tyre pressure control system (4a to 4d) monitors the air pressure of the tyres by means of the speed sensor signals in a manner known per se.

4.  Method for monitoring the air pressure of the tyres of an automotive vehicle, according to one of claims 1 to 2, **characterised in that**

- there is fixedly associated with each wheel (2a to 2d) of the automotive vehicle respectively one speed sensor (12a to 12d), and **in that**

- by means of the speed sensor signals and the air pressures transmitted from the tyre pressure control devices (4a to 4d) at least one performance graph is produced by means of which, should a specific tyre pressure control device (4a to 4d) fail, with the knowledge of the speed sensor signals and the air pressures transmitted from the remaining tyre pressure control devices (4a to 4b) it is possible to determine at least approximately the air pressure of the tyre with which the failed tyre pressure control device (4a to 4d) is associated, and **in that**

- when the transmission pause of a specific tyre pressure control device (4a to 4d) exceeds the predetermined first limit value, the air pressure of the corresponding tyre is determined at least approximately with the aid of the performance graph, the speed sensor signals and the air pressures transmitted from the remaining tyre pressure control devices.

5.  Method for monitoring the air pressure of the tyres of an automotive vehicle, according to one of claims 1 to 2, **characterised in that**

- there is fixedly associated with each wheel (2a to 2d) of the automotive vehicle respectively one speed sensor (12a to 12d), and **in that**

- by means of the speed sensor signals and the air pressures transmitted from the tyre pressure control devices (4a to 4d) at least one performance graph is produced, by means of which, should a plurality of tyre pressure control devices (4a to 4d) fail, it is possible to determine with the knowledge of the speed sensor signals whether the air pressure in the tyres of the automotive vehicle is sufficient or whether the air pressure in at least one of the tyres is not sufficient, and **in that**

- when the transmission pause of a plurality of tyre pressure control devices (4a to 4d) exceeds the predetermined first limit value, it is determined with the aid of the performance graph whether the air pressure in the tyres of the automotive vehicle is sufficient, or whether the air pressure in at least one of the tyres is not sufficient.

6.  Automotive vehicle (2a to 2d) having a tyre pressure control system (4a to 4d) which contains on each wheel of the automotive vehicle respectively one tyre pressure control device (4a to 4d) for each tyre and a central unit (10) and monitors the air pressures of the tyres as follows:

- each tyre pressure control device (4a to 4d) measures at intervals of time the air pressure of the tyre associated with it,

- each tyre pressure control device (4a to 4d) transmits at intervals of time a data transmission to the central unit (10), which contains at least the measured air pressure and an individual identification characterising the tyre pressure control device (4a to 4d), there being a transmission pause between two successive data transmissions of a specific tyre pressure control device (4a to 4d),

- the central unit (10) compares the transmitted air pressure with an air pressure stored in it and generates a warning signal if the transmitted air pressure deviates beyond a predetermined amount from the stored air pressure,

**characterised in that**

- in the central unit (10) each transmission pause can be monitored which expires after the receipt of each data transmission which is transmitted from a specific tyre pressure control device (4a to 4d), and **in that**

- the automotive vehicle contains an additional tyre pressure control system (4a to 4d) which monitors the air pressure of the tyres of the automotive vehicle at least when at least one transmission pause exceeds a predetermined first limit value.


**Revendications**

1. Procédé permettant de surveiller la pression d'air des pneumatiques d'un véhicule automobile au moyen d'un système de contrôle de la pression de gonflage des pneumatiques qui comporte à chaque fois, sur chaque roue (2a à 2d) du véhicule automobile, un dispositif de contrôle de la pression de gonflage des pneumatiques (4a à 4d) pour chaque pneumatique, et une unité centrale (10), consistant à effectuer les étapes de procédé suivantes :

- chaque dispositif de contrôle de la pression de gonflage des pneumatiques (4a à 4d) mesure, suivant des intervalles de temps, la pression d'air du pneumatique associé au dispositif de contrôle,
- chaque dispositif de contrôle de la pression de gonflage des pneumatiques (4a à 4d) transmet, suivant des intervalles de temps, une émission de données à l'unité centrale (10) qui contient au moins la pression d'air mesurée et une identification individuelle caractérisant le dispositif de contrôle de la pression de gonflage des pneumatiques (4a à 4d), où il se produit une pause d'émission entre deux émissions de données - qui se suivent - d'un dispositif de contrôle déterminé (4a à 4d) de la pression de gonflage des pneumatiques,
- l'unité centrale (10) compare la pression d'air transmise, à une pression d'air mémorisée dans l'unité centrale et produit un signal d'avertissement lorsque la pression d'air transmise s'écarte de la pression d'air mémorisée en dépassant d'une mesure prédéfinie,

   **caractérisé**

- **en ce que**, dans l'unité centrale (10), le système surveille chaque pause d'émission qui s'écoule après la réception d'une émission de données qui est transmise par un dispositif de contrôle déterminé (4a à 4d) de la pression de gonflage des pneumatiques, et
- **en ce que** la pression d'air des pneumatiques du véhicule automobile est surveillée alors au moins au moyen d'un autre système de contrôle de la pression de gonflage des pneumatiques lorsque au moins une pause d'émission dépasse une première valeur limite supérieure prédéfinie.

2. Procédé permettant la surveillance de la pression d'air des pneumatiques d'un véhicule automobile (2a à 2d) selon la revendication 1, **caractérisé en ce qu'**un signal d'avertissement est produit lorsque au moins une pause d'émission dépasse une seconde valeur limite supérieure prédéfinie qui est nettement plus importante que la première valeur limite supérieure prédéfinie.

3. Procédé permettant la surveillance de la pression d'air des pneumatiques d'un véhicule automobile (2a à 2d) selon la revendication 1 ou 2, **caractérisé en ce que**, à chaque fois, un capteur de vitesse (12a à 12d) est affecté fixement à chaque roue du véhicule automobile (2a à 2d), et **en ce que** l'autre système de contrôle de la pression de gonflage des pneumatiques (4a à 4d) surveille, de façon en soi connue, la pression d'air des pneumatiques au moyen des signaux des capteurs de vitesse.

4. Procédé permettant la surveillance de la pression d'air des pneumatiques d'un véhicule automobile selon la revendication 1 ou 2, **caractérisé**

- **en ce que**, à chaque fois, un capteur de vitesse (12a à 12d) est affecté fixement à chaque roue (2a à 2d) du véhicule automobile, et
- **en ce que**, au moyen des signaux des capteurs de vitesse et des pressions d'air transmises par les dispositifs de contrôle de la pression de gonflage des pneumatiques (4a à 4d), au moins un diagramme caractéristique est établi au moyen duquel, lors d'une défaillance d'un dispositif de contrôle déterminé (4a à 4d) de la pression de gonflage des pneumatiques, en ayant connaissance des signaux des capteurs de vitesse et des pressions d'air transmises par les autres dispositifs de contrôle de la pression de gonflage des pneumatiques (4a à 4d), la pression d'air du pneumatique peut être déterminée au moins approximativement, pneumatique auquel est affecté le dispositif de contrôle défaillant (4a à 4d) de la pression de gonflage des pneumatiques, et
- **en ce que**, lorsque la pause d'émission d'un dispositif de contrôle déterminé (4a à 4d). de la pression de gonflage des pneumatiques dépasse alors la première valeur limite supérieure prédéfinie, la pression d'air du pneumatique correspondant est déterminée au moins approximativement, à l'aide du diagramme caractéristique des signaux des capteurs de vitesse et des pressions d'air transmises par les autres dispositifs de contrôle de la pression de gonflage des pneumatiques.

5. Procédé permettant la surveillance de la pression d'air des pneumatiques d'un véhicule automobile selon la revendication 1 ou 2, **caractérisé**

- **en ce que**, à chaque fois, un capteur de vitesse (12a à 12d) est affecté fixement à chaque roue (2a à 2d) du véhicule automobile, et
- **en ce que**, au moyen des signaux des capteurs de vitesse et des pressions d'air transmises par les dispositifs de contrôle de la pression de gonflage des pneumatiques (4a à 4d), au moins un diagramme caractéristique est établi au moyen duquel, dans le cas d'une défaillance de plusieurs dispositifs de contrôle de la pression de gonflage des pneumatiques (4a à 4d), en ayant connaissance des signaux des capteurs de vitesse, on peut déterminer le fait de savoir si la pression d'air dans les pneumatiques du véhicule automobile est suffisante ou si la pression d'air dans au moins l'un des pneumatiques n'est pas suffisante et,
- **en ce que**, lorsque la pause d'émission de plusieurs dispositifs de contrôle de la pression de gonflage des pneumatiques (4a à 4d) dépasse alors la première valeur limite supérieure prédéfinie, on détermine, à l'aide du diagramme caractéristique, le fait de savoir si la pression d'air dans les pneumatiques du véhicule automobile est suffisante ou si la pression d'air dans au moins l'un des pneumatiques n'est pas suffisante.

6. Véhicule automobile (2a à 2d) comprenant un dispositif de contrôle de la pression de gonflage des pneumatiques (4a à 4d) qui comporte à chaque fois, sur chaque roue du véhicule automobile, un dispositif de contrôle de la pression de gonflage des pneumatiques (4a à 4d) pour chaque pneumatique, et une unité centrale (10), et surveille, comme suit, les pressions d'air des pneumatiques :

- chaque dispositif de contrôle de la pression de gonflage des pneumatiques (4a à 4d) mesure, suivant des intervalles de temps, la pression d'air du pneumatique affecté au dispositif de contrôle,
- chaque dispositif de contrôle de la pression de gonflage des pneumatiques (4a à 4d) transmet, suivant des intervalles de temps, une émission de données à l'unité centrale (10) qui contient au moins la pression d'air mesurée et une identification individuelle caractérisant le dispositif de contrôle de la pression de gonflage des pneumatiques (4a à 4d), où il se produit une pause d'émission entre deux émissions de données - qui se suivent - d'un dispositif de contrôle déterminé (4a à 4d) de la pression de gonflage des pneumatiques,
- l'unité centrale (10) compare la pression d'air transmise à une pression d'air mémorisée dans l'unité centrale, et produit un signal d'avertissement lorsque la pression d'air transmise s'écarte de la pression d'air mémorisée, en dépassant d'une mesure prédéfinie,

**caractérisé**

- **en ce que**, dans l'unité centrale (10), le système peut surveiller chaque pause d'émission qui s'écoule après la réception de chaque émission de données qui est transmise par un dispositif de contrôle déterminé (4a à 4d) de la pression de gonflage des pneumatiques, et
- **en ce que** le véhicule automobile contient un autre système de contrôle de la pression de gonflage des pneumatiques (4a à 4d) qui surveille au moins la pression d'air des pneumatiques du véhicule automobile lorsque au moins une pause d'émission dépasse alors une première valeur limite supérieure prédéfinie.

# FIG. 1

Kennung der RDKV 4a / VR
Kennung der RDKV 4b / HR
Kennung der RDKV 4c / HL
Kennung der RDKV 4d / VL

EP 1 044 829 B1

```
┌─────────────────────────────────┐
│         Empfang der             │      (100)
│    Datensendung einer RDKV      │
└─────────────────────────────────┘

┌─────────────────────────────────┐
│     Zuordnung zur Radposition   │      (101)
└─────────────────────────────────┘

┌─────────────────────────────────┐
│  seit Datensendung vergangene Zeit t │   (102)
└─────────────────────────────────┘
```

**16**

```
┌─────┐        ◇              ┌───┐     ┌──────────────────────────┐
│ G₁  │─────  t>G₁?  ─────────│ n │─────│  Weitere Überwachung mit │   (103)
└─────┘        ◇              └───┘     │  RDKV des ersten RDKS    │
                │                       └──────────────────────────┘
              ┌───┐
              │ j │
              └───┘
```

```
┌─────────────────────────────────┐
│  Luftdruck in zugeordneter Radposition │   (104)
│  wird mit weiteren RDKS überwacht │
└─────────────────────────────────┘
```

**18**

```
┌─────┐        ◇              ┌───┐
│ G₂  │─────  t>G₂?  ─────────│ n │
└─────┘        ◇              └───┘
                │
              ┌───┐
              │ j │
              └───┘

┌──────────────────┐
│    Warnsignal    │      (105)
└──────────────────┘
```

# FIG. 2